# EUROPEAN PATENT SPECIFICATION

(11) **EP 2 609 833 B1**
(45) Date of publication and mention of the grant of the patent: **24.06.2015**
(21) Application number: 12193335.2
(22) Date of filing: 20.11.2012
(51) Int. Cl.: A47B 96/06, F16B 12/24

(54) **Concealed shelf-support device**
Verborgene Regalträgervorrichtung
Dispositif de support à étagères dissimulé

(30) Priority: 30.12.2011 IT PN20110085
(43) Date of publication of application: 03.07.2013
(73) Proprietor: Ferramenta Livenza S.r.l., 33070 Maron di Brugnera, Pordenone (IT)
(72) Inventor: Carnelos, Luca, 33080 Porcia (PN) (IT); Della Rosa, Simone, 33074 Fontanafredda (PN) (IT); Durigon, Giulio, 33078 San Vito al Tagliamento (PN) (IT); Ivan, Abramo, 33080 Porcia (PN) (IT); Verziagi, Davide, 33074 Fontanafredda (PN) (IT); Zonta, Christian, 33079 Sesto al Reghena (PN) (IT)
(74) Representative: Giugni, Valter

(56) References cited:
- EP-A1- 0 058 220
- EP-A1- 1 228 721
- CH-A- 101 351
- DE-U1- 29 922 524

## Description

### TECHNICAL FIELD OF INVENTION

The present invention relates to a concealed shelf-support device, in other words a support and jointing device for shelves and brackets to install in wardrobe-type containers or similar furniture units.

### BACKGROUND OF THE INVENTION

Various types of concealed shelf-support devices are known, defined in these terms due to the fact that, when the shelf is installed on the wall of the furniture piece, the support and joining device is completely hidden from view.

One solution normally adopted is to provide a milled recess on each side of the shelf to form the seat for inserting jointing elements (Patent WO 2010/034467). Normally, the jointing elements are inserted into the milled groove on the side of the shelf. The joint is made by sliding the shelf in a horizontal direction, thus engaging the jointing element with at least one pin fastened to the wall of the furniture piece.

This well-known type of joint is of rather simple construction but scarcely satisfactory. In fact, the milled grooves extend along almost the whole length of the side, requiring a long and costly process, and weaken the shelf considerably. Moreover, this joint is of the single-faced type, since the milling reaches as far as an end of the shelf and remains in view. Thus, it makes it necessary to insert the shelf in a single direction, that is with the open side of the milled cut facing the back wall of the furniture.

A type of joint similar to the above one requires providing blind milled cuts on the sides of the shelf, but in this case additional holes are required on the surface of the shelf, which holes remain visible and may be closed with suitable plugs. This solution is also more problematic in the installation of the shelf, because it is necessary to precisely centre the pins into the holes and slide the shelf to end the installation while centring additional pins. In addition, it does not guarantee the stability of the joint, because the shelf after the installation could shift if it is pushed in a horizontal direction.

A different type of joint and support (Patent AT 373046) includes two sectors, normally semicircular, that are inserted respectively in corresponding recesses formed in the wall of the furniture piece and on the edge of the shelf. The two sectors are provided with catch elements that engage each other in the assembly.

One solution similar to the above one anticipates the use of a revolving cam that is pivoted on one of the two semicircular sectors to engage in a corresponding seat formed in the other sector (Patent US 2010/0111598).

These solutions also suffer from the same drawbacks mentioned above. In addition, a double milling operation is needed, on the wall of the furniture piece in addition to the side of the shelf, which requires additional holes, and a tool is required for installing and removing the shelf. CH 101 351 discloses a shelf-support device comprising a first and second element, the first element being provided with a plurality of inclined surfaces. The second element, that is the shelf, is provided with elastic pins to be introduced within corresponding seats performed in a side of the shelf. The pins of the second element cooperate with the inclined surfaces of the first element. Such a solution is very simple, but it does not ensure the necessary structural function which ensures the support and junction stability for the shelves.

### SUMMARY OF THE INVENTION

The main objective of the invention is to propose a new concealed shelf-support device that resolves the disadvantages of the known prior-art devices, in particular by eliminating exposed holes and also giving the joint a structural function.

A further objective of the invention is to propose a shelf-support device that requires processes, such as drilling and milling, that are less extensive in the components that are to be joined, so as to guarantee the structural strength of the same components.

Another objective of the invention is to propose a shelf-support device that can be mounted and removed without the use of specific tools.

These and other objectives of the invention are achieved with the shelf-support device whose characteristics are defined in the claims of the present patent.

### BRIEF DESCRIPTION OF THE DRAWINGS

Advantages and characteristics of the shelf-support device according to the invention will be evident from the description which follows, by way of nonlimiting example, with reference to the enclosed figures, wherein:
- figure 1 is an exploded isometric view of a shelf-support device in a first embodiment of the invention;
- figure 2 illustrates in a partial horizontal cross section a detail of the device of figure 1 in a position of completed joint;
- figures 3 to 5 illustrate in partial vertical cross section the device of figure 1 in three subsequent phases of assembly;
- figure 6 illustrates in an exploded isometric view a shelf-support device in a second embodiment of the invention;
- figure 7 illustrates in a partial vertical cross section the device of figure 6 in the position of completed assembly;
- figure 8 illustrates in an exploded isometric view a shelf-support device in a third embodiment of the invention;
- figure 9 illustrates in a partial vertical cross section the device of figure 8 in the position of completed assembly.

### DETAILED DESCRIPTION OF THE INVENTION

The concealed shelf-support device to join and support a shelf or similar element on a wall of a furniture piece or similar unit, according to the invention, includes a first element 10 that is inserted into a relative recess formed in the wall P and that cooperates with a second element 11 that is inserted into a relative recess formed on the side of the shelf R, the first element forming the seat within which is engaged the second element consisting of a spring-loaded pin.

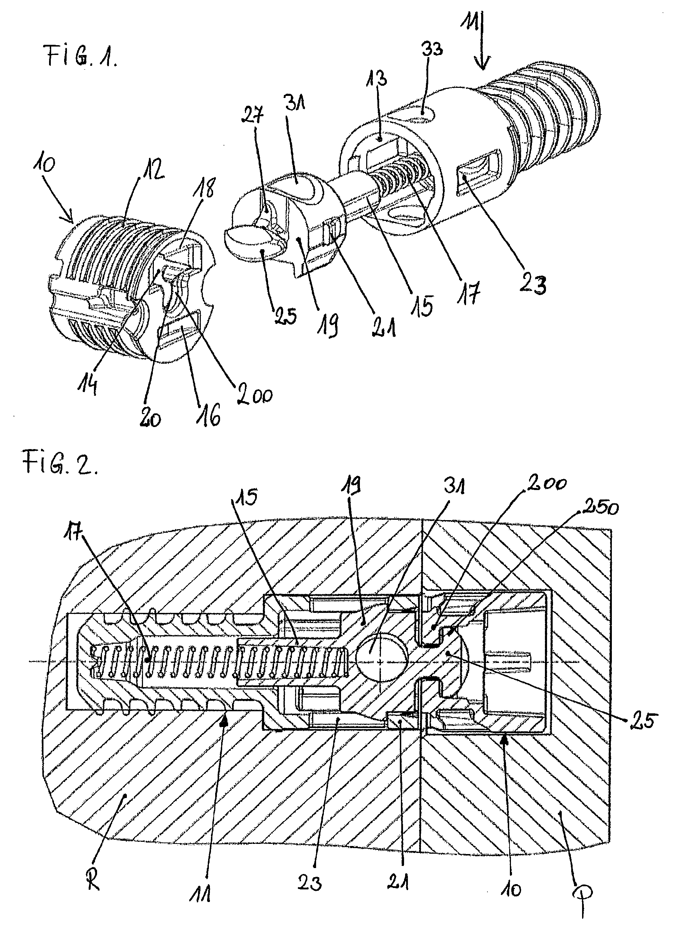

In a first embodiment of the invention (figures 1 and 2), the first element 10 of the shelf support is represented by a generally cylindrical bushing, with the external surface provided with ribs 12 for a steady and secure engagement in the recess formed in the wall P. The bushing 10 is provided with a shaped opening 14 and, possibly, a blind recess 16. The opening 14 has a curved profile that is substantially T-shaped with an inclined internal plane 18, that forms an "invite" surface for inserting the second element 11 of the shelf support. In addition, the opening 14 has a lower edge 20 with a stepped internal surface 200, wherein the end of the second element 11 is engaged. On the internal surface of the bushing 10 are also formed, in a diametrically opposite position, strike elements 22 to guarantee the engagement of the second element 11 inside the first element 10. The blind recess 16 is suitable to receive a stop element, possibly associated with the second element 11.

The second element 11 is made up of a hollow body 13 in which is inserted the shaped hollow pin 15, which is urged by a helical spring 17. The spring 17 acts between the closed bottom of the hollow body 13 and the head 19 of the hollow pin 15. The pin 15 is held inside the hollow body 13 by engaging teeth 21, protruding from the external surface of the head 19 of the pin 15, with a corresponding window 23 formed in the wall of the body 13.

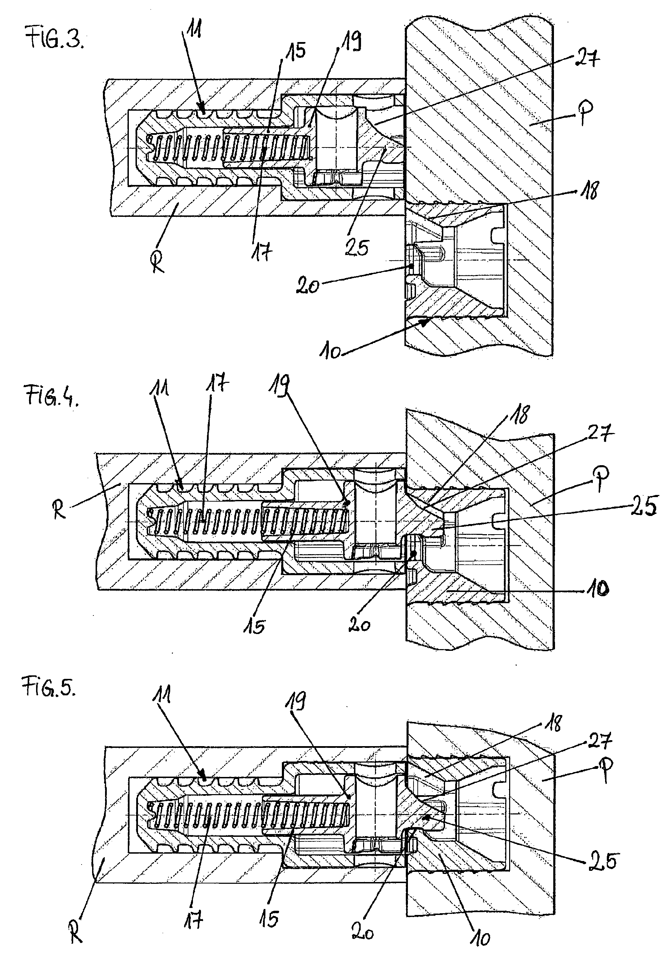

The head 19 of the pin 15 extends axially outside the body 13 with a prong 25 and a rib 27 orthogonal to the prong 25 and inclined with respect to the axis of the head 19. The prong 25 and the rib 27 are integral and form a guide element that cooperates with the inclined plane 18 of the first element 10 for inserting the second element 11 into the first element 10 and removing it therefrom. The prong 25 has, preferably, an anvil shape and is provided with at least one undercut 250 (figure 3).

The head 19 of the pin 15 is also provided, in a position diametrically opposed to the rib 27, with a blind recess 29 that is suitable to cooperate with the lower stepped edge 20 of the opening 14 of the first element 10.

The joint and the shelf support R on the wall P is achieved with an extremely simple and rapid operation, in accordance with one objective of the invention. In fact, the shelf R is arranged with the side against the wall P so that the pin 15 is thrust inside the body 13, against the action of the spring 17, by effect of the interference between the head 19 of the pin 15 and the wall P (fig. 2).

Thus, the shelf R is moved in a direction parallel to the wall; for example, it is lowered in a vertical direction, to bring the head 19 of the pin 15 to match the opening 14 of the bushing 10 (figure 4). As soon as this position is reached, the spring 17 thrusts the pin 15 to enter into the opening 14 of the bushing 10, with the prong 25 and the rib 27 sliding along the inclined plane 18.

The shell R is moved until the second element 11 comes to be positioned coaxially with the first element 10 (figure 5); the pin 15 is thrust by the spring 17 in a position of complete insertion into the opening 14 of the bushing 10. The pin 15 remains locked into the bushing 10 thanks to the engagement of the anvil-shaped prong 25 with the strike elements 22 on the internal surface of the bushing 10. The axial traction between the two elements comprising the jointing device, so as to give a greater structural solidity when the assembly is completed, is achieved through the engagement of the undercut 250 of the prong 25 with the internal surface 200 of the first element 10 of the joint.

Likewise, the operation for disassembling the shelf R from the wall P is quite simple, and it is carried out by operating in a reverse sequence with respect to its assembling. In fact, it is sufficient to push the shelf in a direction parallel to the surface of the wall, causing the prong 25 and the rib 27 to slide along the inclined plane 18 so as to return the pin 15 into the body 11 against the action of the spring 17, until these elements become completely disengaged.

The embodiment described illustrates the first element 10, whose opening 14 is provided with the inclined plane 18, and the second element 11, to the head 19 of which are associated the prong 25 and the rib 27, to guide the insertion and the extraction of one element into or out of the other. However, it is evident that for the operation of the jointing device it is sufficient that only one of the two elements 10 and 11 be provided with an inclined guide plane or rib.

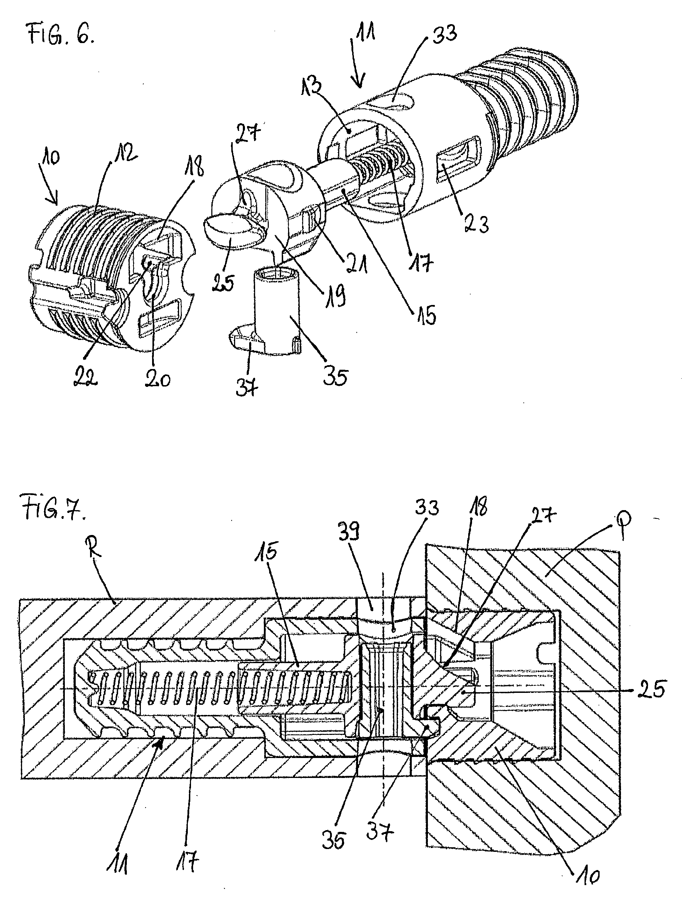

In a second embodiment of the invention (figures 6 and 7), the jointing device includes the same elements as in the previous solution, which are indicated with the same reference numerals. The difference is represented by the fact that the head 19 of the pin 15 is crossed by a through hole 31, orthogonal to the axis of the pin 15, and the body 13 of the second jointing element 11 is provided with diametrically opposite holes 33 corresponding to the hole 31. In the hole 31 is inserted a hollow pin 35 provided at one end with an appendage 37 that extends radially outwardly. The hollow pin 35 can be rotated around its longitudinal axis by means of any known tool, so as to bring the appendage 37 into engagement with the blind recess 16 on the bushing 10. The operation can be carried out from either end of the pin 35. This prevents the possibility of the shelf R becoming accidentally disengaged from the wall P. This solution requires that the shelf R also be provided with at least one hole 39, corresponding to the holes 31 and 33, of the pin 15 and the body 13, respectively. Naturally, the holes 39 can be suitably closed, for example by means of small plugs to prevent the entrance of foreign bodies.

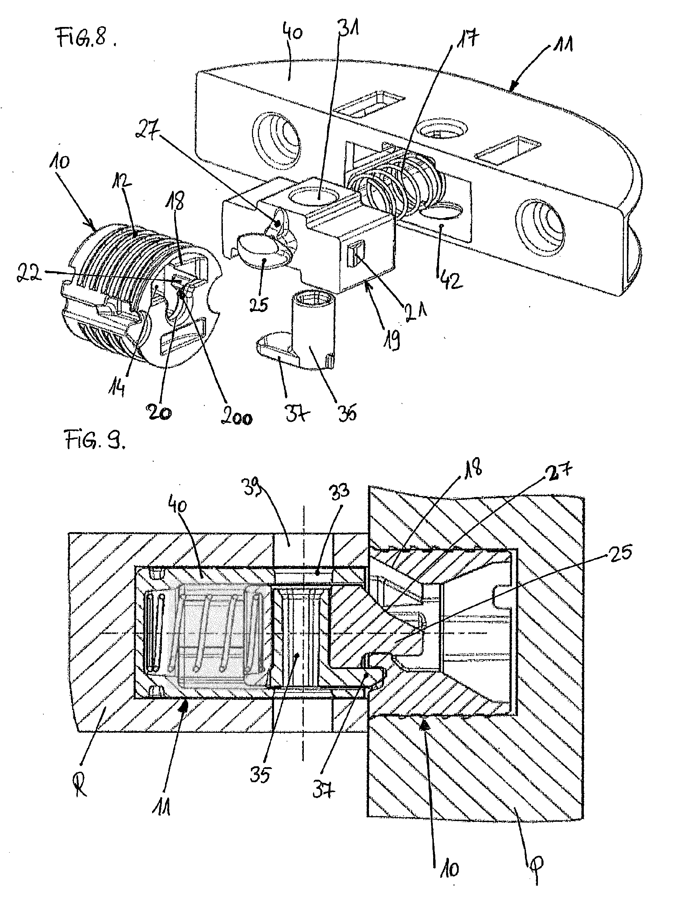

In a third embodiment of the invention (figures 8 and 9), based on the same principle of operation as the previous embodiments, the second element 11 of the shelf support consists of a box-like body 40, preferably of semicircular shape, that is inserted into a corresponding seat formed on the side of the shelf R. The box-like body 40 has a flat frontal surface which is brought flush with the surface of the side of the shelf and is provided with an opening 42, for inserting the pin 15 provided with a spring 17. The box-like body 40 is, preferably fastened to the shelf R by means of screws. In addition, the opening 42 has a rectangular cross section and the head 19 of the pin 15 has a corresponding parallelepiped shape. The other details of the device are completely similar to those of the previously described second solution, and are indicated with the same numerical references. The operation is also the same.

The concealed shelf-support device according to the invention, in its various embodiments, thus makes it possible to achieve the proposed objectives. In fact, it is particularly simple and limits to a minimum both the work required on the elements to be joined (wall and shelf) and the assembling and disassembling operations.

Moreover, the device also fills an effective structural function, since the engagement of the end of the head 19 of the pin 15 with the edge of the opening on the bushing 10 subjects the two elements making up the device to a tractive force, thus ensuring a joint with a better structural hold.

It should be noted that further variants can be achieved without departing from the scope of protection of the present patent. For example, the position of the two elements that make up the junction and support device can be switched between the side of the shelf and the wall. In addition, the device can also be mounted in a position rotated by 90° with respect to the solutions described, if this is required and allowed by the specific condition of the elements to be joined.

## Claims

1. Concealed shelf-support device to fasten and support a shelf (R) or a similar element to a wall (P) of a furniture unit or similar element, comprising a first joining and support element (10) inserted into a relative recess formed in the wall and cooperating with a second joining and support element (11) inserted in a relative recess formed on the side of the shelf, the first element forming the seat in which is engaged the second element consisting of a spring-loaded pin (15, 17), at least one of said first and second joining elements (10, 11) is provided with a surface (18, 27) that is inclined with respect to the surface of the shelf to be installed on the wall, said inclined surface being suitable to automatically guide both the insertion and the exit of said spring-loaded pin (15, 17) with respect to said seat through the displacement of the shelf (R) in a direction parallel to the wall (P), the first joining element consists of a bushing (10) provided with an opening (14) for the passage of the spring-loaded pin (15, 17), said inclined surface (18) being formed in said opening (14), and the second joining element (11) includes a hollow body (13) in which is inserted a shaped hollow pin (15), which is urged by a helical spring (17) suitable to act between the closed bottom of the hollow body (13) and the head (19) of the hollow pin (15), **characterized in that** the head (19) of the pin (15) extends axially outside the body (13) with an anvil-shaped prong (25) and a rib (27) orthogonal to the prong (25) and inclined with respect to the axis of the head (19), the prong (25) and the rib (27) being integral with each other and forming a guide element that cooperates with the opening (14) of the first element (10) for inserting the second element (11) into and disconnecting it from the first element (10).

2. Concealed shelf-support device as in claim 1, **characterized in that** the prong (25) of the pin (15) is provided with at least one undercut (250) suitable to engage an internal stepped surface (200) of the first element (10).

3. Concealed shelf-support device as in claim 2, **characterized in that** the prong (25) of the head (19) of the pin (15) engages strike elements (22) formed on the inside surface of the first element (10).

4. Concealed shelf-support device as in claim 3, **characterized in that** the pin (15) is held inside the hollow body (13), by means of teeth (21) projecting from the external surface of the head (19) of the pin (15) engaging a corresponding window (23) formed in the wall of the hollow body (13).

5. Concealed shelf-support device as in claim 4, **characterized in that** the head (19) of the pin (15) is crossed by a hole (31), orthogonal to the axis of the pin (15), and the body (13) of the second joining element (11) is provided with diametrically opposite holes (33) corresponding to the hole (31), there being inserted in said hole (31) a hollow pin (35) provided at one end with a radially extending appendage (37) suitable to engage, upon the rotation of the pin (35), a blind recess (16) formed on the bushing (10).

## Patentansprüche

1. Verborgene Regalbretthaltevorrichtung zum Befestigen und Halten eines Regalbretts (R) oder eines ähnlichen Elements an einer Wand (P) einer Möbeleinheit oder eines ähnlichen Elements, die ein erstes Verbindungs- und Halteelement (10) umfasst, das in eine relative Vertiefung in der Wand eingesteckt ist und mit einem zweiten Verbindungs- und Halteelement (11) zusammenwirkt, das in eine relative Vertiefung an der Seite des Regalbretts eingesteckt ist, wobei das erste Element den Sitz bildet, in den das aus einem gefederten Stift bestehende zweite Element eingreift, wobei das erste und/oder das zweite Verbindungselement (10, 11) mit einer Fläche (18, 27) versehen ist, die in Bezug auf die Fläche des an der Wand zu installierenden Regalbretts geneigt ist, wobei die geneigte Fläche geeignet ist, um das Einstecken und das Austreten des gefederten Stifts (15, 17) automatisch in Bezug auf den Sitz durch die Verschiebung des Regalbretts (R) in einer Richtung parallel zu der Wand (P) zu führen, wobei das erste Verbindungselement aus einer Hülse (10) besteht, die mit einer Öffnung (14) für den Durchgang des gefederten Stifts (15, 17) versehen ist, wobei die geneigte Fläche (18) in der Öffnung (14) ausgebildet ist, und wobei das zweite Verbindungselement (11) einen hohlen Körper (13) umfasst, in den ein geformter hohler Stift (15) eingesteckt wird, der durch eine Spiralfeder (17) gedrückt wird, die geeignet ist, um zwischen dem geschlossenen Boden des hohlen Körpers (13) und dem Kopf (19) des hohlen Stifts (15) zu wirken, **dadurch gekennzeichnet, dass** sich der Kopf (19) des Stifts (15) axial außerhalb des Körpers (13) mit einem ambossförmigen Zinken (25) und einer Rippe (27) orthogonal zu dem Zinken (25) erstreckt und in Bezug auf die Achse des Kopfs (19) geneigt ist, wobei der Zinken (25) und die Rippe (27) einstückig miteinander ausgebildet sind und ein Führungselement bilden, das mit der Öffnung (14) des ersten Elements (10) zusammenwirkt, um das zweite Element (11) in das erste Element (10) einzustecken und von diesem zu trennen.

2. Verborgene Regalbretthaltevorrichtung nach Anspruch 1, **dadurch gekennzeichnet, dass** der Zinken (25) des Stifts (15) mit wenigstens einer Kerbe (250) versehen ist, die geeignet ist, um in eine innere gestufte Fläche (200) des ersten Elements (10) einzugreifen.

3. Verborgene Regalbretthaltevorrichtung nach Anspruch 2, **dadurch gekennzeichnet, dass** der Zinken (25) des Kopfs (19) des Stifts (15) in Anschlagelemente (22) eingreift, die an der Innenfläche des ersten Elements (10) ausgebildet sind.

4. Verborgene Regalbretthaltevorrichtung nach Anspruch 3, **dadurch gekennzeichnet, dass** der Stift (15) in dem hohlen Körper (13) mittels Zähnen (21) gehalten wird, die von der Außenfläche des Kopfs (19) des Stifts (15) vorstehen und in ein entsprechendes Fenster (23) in der Wand des hohlen Körpers (13) eingreifen.

5. Verborgene Regalbretthaltevorrichtung nach Anspruch 4, **dadurch gekennzeichnet, dass** der Kopf (19) des Stifts (15) durch ein Loch (31) gekreuzt wird, das orthogonal zu der Achse des Stifts (15) ist, und der Körper (13) des zweiten Verbindungselements (11) mit diametral gegenüberliegenden Löchern (33) in Entsprechung zu dem Loch (31) versehen ist, wobei in das Loch (31) ein hohler Stift (35) eingesteckt wird, der an einem Ende mit einer sich radial erstreckenden Erweiterung (37) versehen ist, die geeignet ist, um bei einer Drehung des Stifts (35) in eine blinde Vertiefung (16) an der Hülse (10) einzugreifen.

## Revendications

1. Dispositif dissimulé de support pour étagères pour fixer et soutenir une étagère (R) ou un élément semblable à une paroi (P) d'une unité de meuble ou un élément similaire, comprenant un premier élément de liaison et de support (10) inséré dans un évidement formé dans la paroi et coopérant avec un deuxième élément de liaison et de support (11) inséré dans un évidement formé sur le côté de l'étagère, le premier élément formant le siège dans lequel est engagé le second élément constitué par une broche à ressort (15, 17), au moins l'un desdits premier et second éléments de liaison (10, 11) est pourvu d'une surface (18, 27) qui est inclinée par rapport à la surface de l'étagère pour être installée sur la paroi, ladite surface inclinée étant adaptée pour guider automatiquement à la fois l'insertion et la sortie de ladite broche à ressort (15, 17) par rapport audit siège par le déplacement de l'étagère (R) dans une direction parallèle à la paroi (P), le premier élément de liaison (10) est constitué d'une douille pourvue d'une ouverture (14) pour le passage de la broche à ressort (15, 17), ladite surface inclinée (18) étant formée dans ladite ouverture (14), et le deuxième élément de liaison (11) comprend un corps creux (13) dans lequel est insérée une broche (15) creuse, qui est sollicitée par un ressort (17) hélicoïdal adapté pour agir entre le fond fermé du corps creux (13) et la tête (19) de la broche (15) creuse **caractérisé en ce que** la tête (19) de la broche (15) s'étend axialement à l'extérieur du corps (13) avec une griffe en forme d'enclume (25) et une nervure (27) orthogonale à la griffe (25) et inclinée par rapport à l'axe de la tête (19), la griffe (25) et la nervure (27) étant solidaires l'une de l'autre et formant un élément de guidage qui coopère avec l'ouverture (14) du premier élément (10) pour l'insertion du second élément (11) dans le premier élément (10) et la déconnection du second élément (11) du premier élément (10).

2. Dispositif dissimulé de support pour étagères selon la revendication 1, **caractérisé en ce que** la griffe (25) de la broche (15) est pourvue d'au moins un dégagement (250) adapté pour engager une surface interne étagée (200) du premier élément (10).

3. Dispositif dissimulé de support pour étagères selon la revendication 2, **caractérisé en ce que** la griffe (25) de la tête (19) de la broche (15) vient en prise avec des éléments d'engagement (22) formés sur la surface intérieure du premier élément (10).

4. Dispositif dissimulé de support pour étagères selon la revendication 3, **caractérisé en ce que** la broche (15) est maintenue à l'intérieur du corps creux (13), au moyen de dents (21) faisant saillie de la surface externe de la tête (19) de la broche (15) en prise avec une fenêtre correspondante (23) formée dans la paroi du corps creux (13).

5. Dispositif dissimulé de support pour étagères selon la revendication 4, **caractérisé en ce que** la tête (19) de la broche (15) est traversée par un trou (31), orthogonal à l'axe de la broche (15), et le corps (13) du second élément de liaison (11) est prévu avec des trous diamétralement opposés (33) correspondant au trou (31), une broche creuse (35) munie à une extrémité d'un appendice (37) s'étendant radialement pour s'engager lors de la rotation de la broche (35) dans un évidement borgne (16) formé sur la douille (10), est insérée dans ledit trou (31).
